(19) Europäisches Patentamt
European Patent Office
Office européen des brevets

(11) **EP 1 370 070 B1**

## (12) EUROPÄISCHE PATENTSCHRIFT

(45) Veröffentlichungstag und Bekanntmachung des Hinweises auf die Patenterteilung:
**01.08.2007 Patentblatt 2007/31**

(51) Int Cl.:
***H04N 1/60*** *(2006.01)*

(21) Anmeldenummer: **02012379.0**

(22) Anmeldetag: **06.06.2002**

(54) **Farbmanagement mit Referenzgamut**

Color management via reference gamut

Gestion de couleurs avec gamme de référence

(84) Benannte Vertragsstaaten:
**CH DE FR GB IT LI**

(43) Veröffentlichungstag der Anmeldung:
**10.12.2003 Patentblatt 2003/50**

(73) Patentinhaber: **Imaging Solutions AG**
**8105 Regensdorf (CH)**

(72) Erfinder: **Zolliker, Peter**
**8157 Dielsdorf (CH)**

(74) Vertreter: **Schwabe - Sandmair - Marx**
**Stuntzstrasse 16**
**81677 München (DE)**

(56) Entgegenhaltungen:
**EP-A- 0 611 231          EP-A- 1 102 478**
**US-A- 5 696 839          US-A- 5 734 745**

**Beschreibung**

Die vorliegende Erfindung betrifft die Verarbeitung von Bilddaten, um eine möglichst optimale Farbwiedergabe zu erzielen. Die Erfindung betrifft insbesondere das Gebiet der Fotografie, das heißt die Bilddaten stellen insbesondere fotografische Bilder dar, wie sie durch Bilderfassungsgeräte, wie Fotokameras, Videokameras, Digitalkameras, Scanner etc. gewonnen werden. Die Bilddaten werden zur Ansteuerung von Bilddarstellungssystemen, wie beispielsweise Fotoprintern, Fotolabors, Minilabs, Farb-Laserdrucker, Inkjet-Drucker, Monitore (Flüssigkristallmonitore und CRT-Monitore) usw., verwendet. Die vorliegende Erfindung dient dazu, den Farbeindruck der Bilder, die durch das Bilddarstellungssystem z.B. auf einem Medium (Papier, Fotopapier, Folie etc.) oder einem Schirm (Monitor) dargestellt werden, zu verbessern. Die Erfindung dient insbesondere dazu, den durch ein Eingangsgerät (ein Bilderfassungsgerät, beispielsweise Scanner, Digitalkamera etc.) erfassbaren und/oder ausgebbaren Farbraum (Eingangs-Gamut) mit dem durch das Bilddarstellungssystem darstellbaren Farbraum (Ausgangs-Gamut) abzustimmen, wenn der Eingangs-Gamut mit dem Ausgangs-Gamut nicht übereinstimmt. Die vorliegende Erfindung betrifft also die Verarbeitung von Bilddaten, die von einem Eingangsgerät erfasst wurden und in einem geräteabhängigen Farbraum vorliegen, so dass sie durch ein Bilddarstellungssystem, das ebenfalls einen geräteabhängigen Farbraum festlegt, möglichst optimal ausgegeben werden kann.

Ein Beispiel für das oben beschriebene Anwendungsgebiet der vorliegenden Erfindung stellt die Verarbeitung von sRGB-Bilddaten dar, die beispielsweise von einer Digitalkamera ausgegeben werden und die von einem Bilddarstellungssystem (beispielsweise Fotoprinter oder Minilab) so verarbeitet werden, dass das Bild, das durch die Bilddaten dargestellt wird, mit Hilfe eines Fotopapiers erzeugt wird.

Der sRGB-Farbraum und sein Zusammenhang z.B. mit dem XYZ-Farbraum ist beispielsweise in "The Creation of the sRGB ICC Profile" von Mary Nielsen und Michael Stokes, Hewlett-Packard Company, Boise, Idaho, USA, in Color Research Nr. 568, S. 253-257, 1998, beschrieben. Der sRGB-Farbraum ist aus den folgenden Gründen besonders beliebt:

a) Die Übertragungsfunktion und die Chromatizität der primären Phosphorfarben von Kathodenstrahlröhren (CRT-Monitoren) ähneln dem sRGB-Farbraum sehr. Bilder können also in vernünftiger Qualität auf Monitoren gezeigt werden, ohne dass eine Abbildung der Farben mittels eines Profils zusätzlich erforderlich ist. Der sRGB-Farbraum ist inzwischen so allgemein üblich, dass sogar in Technikfeldern, deren Übertragungsfunktionen stark von sRGB abweichen, wie beispielsweise LCD-Monitore oder Plasmamonitore, diese immer noch die Bilddateneingabe über eine sRGB-Schnittstelle unterstützen.

b) Die Hersteller von digitalen Scannern, Monitoren und Digitalkameras stellen häufig als weiteres Merkmal ihrer Geräte bereit, dass diese sRGB-Bilddaten ausgeben.

c) Nahezu alle Computerprogramme, die herkömmlich erhältlich sind, unterstützen sRGB-ähnliche Farbräume.

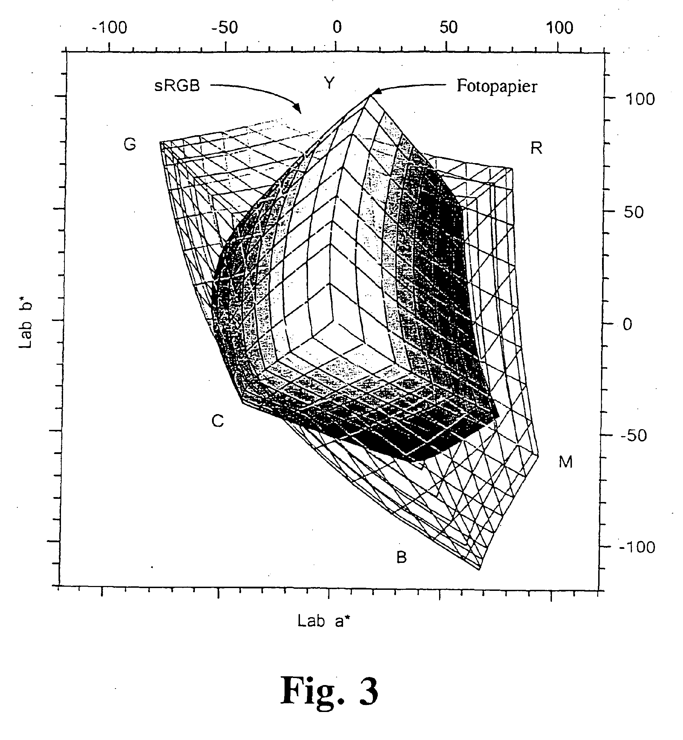

Unglücklicherweise sind der sRGB-Farbraum und der Farbraum des Fotopapiers (z.B. Silberhalogenidpapier) deutlich unterschiedlich (siehe Fig. 3). Weite Gebiete des sRGB-Farbraums, insbesondere die hellen gesättigten Farben, befinden sich weit außerhalb des Gamut des Fotopapiers. Umgekehrt scheitert ein Monitor üblicherweise daran, die dunklen Farben des Fotopapiers zu reproduzieren. Auch Farbräume von Inkjet- und Farblaserdrucker unterscheiden sich wesentlich vom sRGB-Farbraum.

Es ist das Gebiet des Farbmanagements, vorrichtungsabhängige Farbräume aufeinander abzustimmen. Üblicherweise hat jedes Gerät oder jede Vorrichtung sein eigenes Farbprofil. Die Verbindung zwischen Eingangs- und Ausgangsprofilen wird beim Farbmanagement vorzugsweise mittels eines Farbraums vorgenommen, der von den Eingangs- und Ausgangsvorrichtungen unabhängig ist. Dieser Farbraum wird auch Profilverbindungsraum (Profile Connection Space oder PCS) genannt. Eingangs- und Ausgangsvorrichtungen weisen im Allgemeinen einen unterschiedlichen Gamut auf. Das grundlegende Konzept des Farbmanagements ist beispielsweise in dem Artikel "Color Management: Current Practice and the Adoption of a New Standard" von Michael Has und Todd Newman beschrieben, der unter der Internetadresse http://www.color.org/wpaperl.html aufgerufen werden kann. Bei dem grundlegenden Konzept, das kolorimetrische Anpassung (colorimetric match) genannt wird, werden die Farben in beiden Gamuts, soweit möglich, unter Beibehaltung des Farbwerts übergeführt. Farben, die nicht durch ein bestimmtes Ausgangsgerät erzeugt werden können, werden auf die Gamutgrenze abgebildet. Für dieses Verfahren wird der Ausdruck "absoluter Wiedergabeansatz ("Absolute Rendering Intent") verwendet. Kompromisse hinsichtlich der kolorimetrischen Anpassung werden üblicherweise gemacht, um den Weißpunkt der zwei Geräte bzw. Vorrichtungen anzupassen (relativer Wiedergabeansatz bzw. "Relative Rendering Intent"). Zusätzlich können weitere Anpassungen vorgenommen werden, insbesondere indem man auch die dunkelsten Grautöne der zwei Vorrichtungen aufeinander abstimmt (Erkennungs-Wiedergabeansatz bzw. "Perceptual Rendering Intent"). Die Verwendung eines derartigen Farbmanagementsystems und seiner Standardisierung (ICC) erfolgt in der Druckindustrie. Die Übernahme dieses Ansatzes auf die Photofinishing-Industrie ergibt jedoch mehrere Nachteile:

a) Einige Komponenten des Photofinishingsystems sind hinsichtlich einer exakten Farbwiedergabe zu wenig stabil. Dies ist z.B. bei einem Fotopapierprozessor der Fall, dessen Stabilität den Anforderungen eines klassischen Farbmanagementsystems oft nicht genügt. Oder die Information über das Farbprofil des Eingangsgeräts, beispielsweise des Films, ist nicht mit ausreichender Genauigkeit bekannt oder kann sich häufig ändern.

b) Die Ausgangsgeräte verwenden nur die Farben, die die Ausgangs- und Eingangsgeräte gemeinsam haben. Somit wird nicht das volle Potenzial des Ausgangsgeräts verwendet. Die Erfinder haben jedoch erkannt, dass gerade im Fotobereich der Kunde den Farbeindruck eines Bildes als angenehmer oder positiver empfindet, wenn die Bildwiedergabe mit mehr Farben erfolgt, also das Farbpotenzial des Ausgangsgeräts besser nutzt. Dieser angenehme Eindruck ist für den Kunden wichtiger als eine kolorimetrisch exakte Wiedergabe der Bilddaten, wie dies in der Druckindustrie der Fall ist.

c) In jenen Bereichen des Farbraums des Eingangsgeräts, in dem die Farbwerte einer stärkeren Änderung unterzogen werden müssen, um in den Gaumut des Ausgangsgeräts zu passen, gehen die Details von Farbübergängen und Farbnuancierungen verloren.

d) Falls digitale Daten von einem Negativfilm oder vom Abtasten von Farbbildern gewonnen werden und in digitaler Form, beispielsweise als CD, ausgegeben werden, geht Farbinformation verloren, da der Gamut des Negativfilms oder der Ausdrucke bzw. Prints üblicherweise nicht mit dem Gamut des Scanners übereinstimmt. So ist üblicherweise das Ausgabeformat des Scanners sRGB. Falls in einem nächsten Schritt Reprints bzw. erneute Ausdrucke basierend auf den digitalen Daten vorgenommen werden, werden nicht dieselben Ergebnisse erhalten, wie wenn der Ausdruck direkt beispielsweise basierend auf dem Negativfilm vorgenommen worden wäre.

e) Die nummerische Realisierung von Farbverarbeitungsmodulen, die beim Farbmanagement eingesetzt werden und beispielsweise dreidimensionale Nachschlagtabellen (3D-LUTs) verwenden, haben häufig Probleme mit der Genauigkeit und der nummerischen Stabilität in der Nähe der Gamutgrenzen, da die dort vorgenommene Gamutabbildung singuläre erste Ableitungen bei der Gamutgrenze verursachen.

Aus US 5,696,839 ist die Transformation eines Farbkörpers dessen Grenzen vorrichtungabhängig sind und der in einem Lab-Raum dargestellt ist in einen anderen Farbkörper, ebenfalls vorrichtungsabhängis und im Lab-Raum dargestellt, bekannt. Diese Transformation erfolgt in mehreren Schritten, wobei zwischendrin eine Reparameterisierun erfolgt um die stetige Umformung des Ausgangs-Farbkörpers in den End-Farbkörper unter bestimmten Grenzbedingungen zu erleichtern.

Aus EP 1 122 478 ist ein Farb-Managementverfahren bekannt, bei dem ein Gammut-Mapping durchgeführt wird. Einpangsbilddaten sind in einem vorrichtungsabhängigen Farbraum definiert. Die Eingangsbilddaten werden in einen vorrichtungsunabhängigen Farbraum transformiert. Danach wird ein Gammut-Mapping durchgeführt, bei dem die Bilddaten so transformiert werden, dass innerhalb des Gammuts einer simulierten Ausgabevorrichtung vorliegen. Danach wird ein weiteres Gammut-Mapping mit den zu erhaltenden Bilddaten durchgeführt, um die Bilddaten so zu transformieren, dass sie innerhalb der Gammutgrenzen der tatsächlichen Ausgabevorrichtung sind.

Aufgabe der Erfindung ist es, ein Farbmanagement bereitzustellen, das flexibel an verschiedenste Eingangsgeräte (Bilderfassungsgeräte) und Ausgangsgeräte (Bilddarstellungssysteme) angepasst werden kann.

Vorstehende Aufgabe wird durch die Gegenstände der Ansprüche 1, 7, 8 und 9 gelöst. Weiterführende Ausführungsformen sind Gegenstand der Unteransprüche.

Die vorliegende Erfindung betrifft ein Verfahren zum Verarbeiten von Bilddaten, insbesondere ein Farbmanagementverfahren. Die Bilddaten stellen Farbwerte eines Bildes, insbesondere fotografischen Bildes dar. Durch die erfindungsgemäße Verarbeitung sollen die Farbwerte des fotografischen Bildes, das insbesondere durch ein Bilderfassungsgerät erfasst worden ist, an die Bilddarstellungsmöglichkeiten eines Ausgangsgeräts, insbesondere eines Bilddarstellungssystems (Fotoprinter, Fotolabor, Monitor, Drucker, Farb-Laserdrucker, Inkjetdrucker etc.) angepasst werden. Der von einem Gerät handhabbare Farbraum wird als Farb-Gamut des Geräts bezeichnet. Der Farb-Gamut des Eingangsgeräts (beispielsweise Bilderfassungsgerät) umfasst alle Farbwerte, die von dem Eingangsgerät erfassbar sind und ausgegeben werden können. Die von dem Eingangsgerät ausgegebenen Bilddaten, die von dem erfindungsgemäßen Verfahren verarbeitet werden, reflektieren also den Farb-Gamut des Eingangsgeräts, das insbesondere fotografische Information erfasst und/oder verarbeitet. Die von dem erfindungsgemäßen Verfahren empfangenen Bilddaten können auf die verschiedenste Weise empfangen werden, insbesondere über Datenträger, wie z.B. CD, Netzwerke, Internet oder durch direkten Anschluss an ein Bilderfassungsgerät, wie z. B. einen Scanner oder eine Digitalkamera usw. Durch das erfindungsgemäße Verfahren sollen die in das Verfahren eingegebenen Bilddaten so verarbeitet werden, dass die von dem Verfahren ausgegebenen Bilddaten Farbwerte darstellen, die besser an den Farb-Gamut des Ausgangsgeräts angepasst sind, als die in das Verfahren eingegebenen Bilddaten. Der Farb-Gamut des Ausgangsgeräts, also der so genannte Ausgangs-Farb-Gamut umfasst vorzugsweise alle Farbwerte, die bei Eingabe von Bilddaten in das Ausgangsgerät durch das Ausgangsgerät verarbeitbar (z.B. darstellbar, speicherbar und/oder übermittelbar) sind.

Die Bilddaten können wie üblich zweidimensional oder dreidimensional (z. B. Hologramme) sein.

Die vom erfindungsgemäßen Verfahren empfangenen Bilddaten stellen so genannte erste Positionen in einem ersten Farbraum dar und beschreiben erste Farbwerte. Diese Farbwerte haben die Eigenschaft, dass sie innerhalb des Eingangs-Farb-Gamuts liegen.

Gemäß dem erfindungsgemäßen Verfahren werden in einem ersten Schritt die ersten Positionen durch eine Eingangstransformation in zweite Positionen transformiert, die als Referenzpositionen bezeichnet werden. Die Eingangstransformation erfolgt vorzugsweise so, dass die Referenzpositionen in einem zweiten Farbraum vorliegen. Es erfolgt also eine Transformation von einem ersten Farbraum in einen zweiten Farbraum. Vorzugsweise unterscheiden sich der erste Farbraum und der zweite Farbraum. Der erste Farbraum ist insbesondere ein vorrichtungsabhängiger Farbraum des Eingabegeräts und der zweite Farbraum ist ein vorrichtungsunabhängiger Farbraum, wie z.B. CIELAB oder XYZ.

In einem zweiten Schritt werden die Referenzpositionen durch eine Ausgangstransformation in dritte Positionen transformiert. Die Transformation erfolgt vorzugsweise so, dass die dritten Positionen in einem dritten Farbraum vorliegen. Es erfolgt also eine Transformation vom Referenzfarbraum in einen dritten Farbraum. Vorzugsweise unterscheiden sich der zweite Farbraum und der dritte Farbraum. Der dritte Farbraum ist insbesondere ein vorrichtungsabhängiger Farbraum der vorzugsweise an das Ausgangsgerät angepasst ist (beispielsweise ein RGB-Farbraum). Vorzugsweise unterscheidet sich zumindest entweder der erste oder der dritte Farbraum vom zweiten Farbraum. Vorzugsweise ist zumindest ein Teil der ersten Positionen und/oder ersten Farbwerte anders als die zweiten Positionen und/oder zweiten Farbwerte. Vorzugsweise ist zumindest ein Teil der dritten Position und/oder der dritten Farbwerte anders als die zweiten Positionen und/oder zweiten Farbwerte. Vorzugsweise ist zumindest entweder ein Teil der ersten Position oder der dritten Positionen anders als die zweiten Positionen. Vorzugsweise ist zumindest entweder die Eingangstransformation oder die Ausgangstransformation keine Identitätstransformation oder höchstens eine der Transformationen ist eine Identitätstransformation. Die Ausgangstransformation kann beispielsweise ein Identitätstransformation sein, falls der Ausgangs-Farb-Gamut mit dem Referenz-Farb-Gamut übereinstimmt. Auch kann die Eingangstransformation eine Identitätstransformation sein, falls das Eingangs-Farb-Gamut mit dem Referenz-Farb-Gamut übereinstimmt. Beispielsweise kann das Ausgangsgerät ein Datenaufzeichnungsgerät oder eine Netzwerkschnittstelle sein, das bzw. die Bilddaten aufzeichnen oder übermitteln kann, die den Referenz-Farb-Gamut umfassen. Entsprechend kann das Eingangsgerät ein Datenlesegerät oder eine Netzwerkschnittstelle sein, das bzw. die Bilddaten lesen oder empfangen kann, die den Referenz-Farb-Gamut aufspannen. Auf diese Art und Weise können Daten, die Referenzpositionen darstellen, gespeichert/gesendet und/oder gelesen/empfangen werden.

Vorzugsweise wird jedoch der Referenz-Farb-Gamut so gestaltet, dass er weder mit dem Eingangs-Farb-Gamut noch mit dem Ausgangs-Farb-Gamut identisch ist.

Die erfindungsgemäße Eingangstransformation lässt sich zumindest gedanklich in eine Transformation von dem ersten Farbraum in den zweiten Farbraum (genannt "erste Farbraumtransformation") und in eine Abbildung (genannt "erste Abbildung") innerhalb des zweiten Farbraums zerlegen. Dabei wird vorzugsweise bei der Transformation von dem ersten in den zweiten Farbraum der Farbwert nicht geändert. Die aus der Transformation hervorgehenden Positionen werden im folgenden als Eingangstransformationspositionen bezeichnet. Die dann durchgeführte Abbildung innerhalb des zweiten Farbraums kann zumindest teilweise zur Farbwertänderung führen. Obwohl im Folgenden diese Aufgliederung der Eingangstransformation in eine Transformation und eine Abbildung beschrieben wird, ist dies rein beispielhaft, da beispielsweise mathematisch die erste Farbraumtransformation und die erste Abbildung innerhalb des zweiten Farbraums zu einer einzigen zusammengehörigen Eingangstransformation zusammengefasst werden kann.

Ebenso lässt sich die erfindungsgemäße Ausgangstransformation zumindest gedanklich in eine Abbildung (genannt "zweite Abbildung") innerhalb des zweiten Farbraums und in eine Transformation vom Referenzfarbraum in den dritten Farbraum (genannt zweite Farbraumtransformation) zerlegen. Die durchgeführte Abbildung innerhalb des zweiten Farbraums kann zumindest teilweise zur Farbwertänderung führen. Dagegen wird vorzugsweise bei der Transformation vom zweiten in den dritten Farbraum der Farbwert nicht geändert. Die aus der Abbildung hervorgehenden Positionen werden im folgenden als Ausgangstransformationspositionen bezeichnet, die dann durch die Transformation in den dritten Farbraum in die dritten Positionen übergeführt werden. Obwohl im Folgenden diese Aufgliederung der Ausgangstransformation in eine Abbildung und Transformation beschrieben wird, ist dies rein beispielhaft, da beispielsweise mathematisch die zweite Abbildung innerhalb des zweiten Farbraums und die zweite Farbraumtransformation zu einer einzigen zusammengehörigen Ausgangstransformation zusammengefasst werden kann.

Gemäß dem erfindungsgemäßen Verfahren erfolgt also z. B. nach der vorgenannten Eingangstransformation in den zweiten Farbraum eine Anpassung der Farbwerte an einen vorgegebenen Farb-Gamut, der als Referenz-Farb-Gamut bezeichnet wird, durch die erste Abbildung. Dieser Farb-Gamut dient als eine "Brücke" bzw. "Vermittlung" zwischen dem Eingangs-Farb-Gamut und dem Ausgangs-Farb-Gamut. Die Referenzpositionen sind sowohl bezüglich Farbraum wie auch Gamut unabhängig vom Eingabe- wie vom Ausgabegerät. Es gibt also nicht nur eine Farbraumplattform, sondern auch eine "Gamutplattform". Vorzugsweise werden die durch die Eingangstransformationspositionen dargestellten Farbwerte, die vorzugsweise den ersten Farbwerten entsprechen, innerhalb des Referenzfarbraums an die durch den Referenz-Farb-Gamut beschriebenen Farbdarstellungsmöglichkeiten angepasst. Dies erfolgt vorzugsweise mittels der ersten Abbildung, die die Eingangstransformationspositionen im Referenzfarbraum auf andere Positionen abbildet, bei denen es sich um die oben erwähnten Referenzpositionen handelt. Die Referenzpositionen beschreiben die Referenzfarbwerte im Referenzfarbraum. Die Abbildung ist so gestaltet, dass die Referenzfarbwerte (auch "zweite Farbwerte" genannt) innerhalb des Referenz-Farb-Gamuts (bzw. auf dessen Grenze) liegen. Der Referenz-Farb-Gamut ist vorzugsweise so gestaltet, dass er die Farbwerte aller in Betracht gezogenen und/oder vorbestimmten Eingangs-Farb-Gamuts und Ausgangs-Farb-Gamuts zumindest in etwa umfasst.

Vorzugsweise umfasst der Referenz-Farb-Gamut insbesondere zusätzlich zum Eingangs-Farb-Gamut (oder zusätzlich zu einer Vereinigungsmenge einer Anzahl oder Vielzahl vorbestimmter Eingangs-Farb-Gamuts) zumindest Teile des Ausgangs-Farb-Gamuts (oder einer Vereinigungsmenge einer Anzahl oder Vielzahl vorbestimmter Ausgangs-Farb-Gamuts), die im Eingangs-Farb-Gamut (oder in der Vereinigungsmenge einer Anzahl oder Vielzahl von Eingangs-Farb-Gamuts) nicht enthalten sind, und/oder zusätzlich zum Ausgangs-Farb-Gamut (oder zusätzlich zu der Vereinigungsmenge einer Anzahl oder Vielzahl von Ausgangs-Farb-Gamuts) zumindest Teile des Eingangs-Farb-Gamuts (oder der einer Vereinigungsmenge einer Anzahl oder Vielzahl vorbestimmter Eingangs-Farb-Gamuts), die im Ausgangs-Farb-Gamut (oder der Vereinigungsmenge einer Anzahl oder Vielzahl vorbestimmter Ausgangs-Farb-Gamuts) nicht enthalten sind, und umfasst besonders vorzugsweise den Ausgangs-Farb-Gamut (oder die Vereinigungsmenge einer Anzahl oder Vielzahl vorbestimmter Ausgangs-Farb-Gamuts) und den Eingangs-Farb-Gamut (oder die Vereinigungsmenge einer Anzahl oder Vielzahl vorbestimmter Eingangs-Farb-Gamuts) zumindest in etwa. Vorzugsweise umfasst der Referenzfarbgamut Farbwerte vom Ausgangs-Farb-Gamut (oder der Vereinigungsmenge einer Anzahl oder Vielzahl vorbestimmter Ausgangs-Farb-Gamuts), die im Eingangs-Farb-Gamut (oder der Vereinigungsmenge einer Anzahl oder Vielzahl vorbestimmter Eingangs-Farb-Gamuts) nicht enthalten sind, und/oder Farbwerte vom Eingangs-Farb-Gamut (oder der Vereinigungsmenge einer Anzahl oder Vielzahl vorbestimmter Eingangs-Farb-Gamuts), die im Ausgangs-Farb-Gamut nicht enthalten sind.

Vorzugsweise wird die erste Abbildung innerhalb des Referenzfarbraums bijektiv gestaltet, das heißt es geht insbesondere keine Farbinformation verloren.

Die dritten Positionen werden vorzugsweise dann verwendet, die Bildsteuerdaten zu bestimmen, die zur Ansteuerung des Ausgangsgeräts dienen, der den Ausgangs-Farb-Gamut aufweist.

Die Referenzpositionen dienen dann vorzugsweise als Basis, um verarbeitete Bilddaten zu gewinnen, die der Ansteuerung eines Ausgabegeräts dienen. Die Ausgangstransformation ist so gestaltet, dass die dritten Farbwerte innerhalb des Ausgabe-Farb-Gamuts (bzw. auf dessen Grenze) liegen. Vorzugsweise wird die zweite Abbildung innerhalb des Referenzfarbraums bijektiv gestaltet werden, das heißt es geht insbesondere keine Farbinformation verloren.

Vorzugsweise wird sowohl die Eingangstransformation wie auch die Ausgangstransformation bijektiv gestaltet. Auf diese Art und Weise ist die Verarbeitung der Bilddaten reversibel, so dass auch bei einer längeren Arbeitskette keine Farbinformation verloren geht. Insbesondere sind bijektive Transformationen vorteilhaft, wenn Daten, die von einem Eingangsgerät, beispielsweise Filmscanner einerseits auf einem Ausgabegerät, beispielsweise einem Fotoprinter, ausgegeben, werden und zugleich auf einem digitalen Medium, wie CD zwischengespeichert werden. Wenn später Bilder ab diesem digitalen Medium nochmals auf einem Ausgabegerät, insbesondere dem gleichen Ausgabegerät, ausgegeben werden, kann sichergestellt werden, dass keine Farbinformation verlorengeht. Dazu muss die Transformation beim Lesen ab digitalem Medium (ist in dieser Funktion Eingangsgerät) der inversen Transformation des Schreibens (ist in dieser Funktion Ausgangsgerät) entsprechen, was Bijektivität voraussetzt. Erfindungsgemäß können also dieselben Geräte sowohl als Eingangsgerät als auch als Ausgangsgerät verwendet werden.

Erfindungsgemäß werden die Eingangstransformation und die Ausgangstransformation, insbesondere die erste Abbildung und die zweite Abbildung innerhalb des Referenzfarbraums nach vorgegebenen Randbedingungen und/ oder Eigenschaften gestaltet. Vorzugsweise sind die Referenzfarbwerte zumindest im Wesentlichen gleich den ersten Farbwerten, wenn die ersten Positionen (ersten Farbwerte) in einem vorgegebenen Bereich oder Teil des ersten Farbraums liegen und/oder wenn die Eingangstransformations- und oder Referenzpositionen (zweiten Farbwerte) in einem vorgegebenen Bereich oder Teilraum des Referenzfarbraums liegen. Insbesondere sind die zweiten Farbwerte zumindest im Wesentlichen gleich den ersten Farbwerten, wenn die ersten und/oder Referenzfarbwerte (auch "zweite Farbwerte" genannt) ein mittleres Grau darstellen oder in dessen Nähe sind. Auch erfolgt vorzugsweise keine oder keine wesentliche Änderung der Farbwerte, wenn die Farbwerte (die durch die ersten Positionen und/oder Referenzpositionen dargestellt werden) im Innenbereich (innen liegenden Unterraum, der insbesondere ein mittleres Grau umfasst) des Eingangs-Farb-Gamuts und/oder des Referenz-Farb-Gamuts liegen. Dieser Innenbereich ist insbesondere von der Grenzfläche des Referenz-Farb-Gamuts und/oder des Eingangs-Farb-Gamuts entfernt. Die Entfernung beträgt beispielsweise weniger als 50, 30 oder 10% des Mindestabstands zur Grenze des Eingangs-Farb-Gamuts und/oder Referenz-Farb-Gamuts.

Vorzugsweise erfolgt also die Eingangstransformation lageabhängig, also z. B. abhängig von der Position der ersten Positionen und/oder der Referenzpositionen.

Die ersten Farbwerte, die auf der Grenzfläche des Eingangs-Farb-Gamuts liegen, werden durch die Abbildung der Eingangstransformation im Referenzfarbraum vorzugsweise auf die Grenze (Grenzfläche) des Referenz-Farb-Gamuts abgebildet.

Vorzugsweise sind die Referenzfarbwerte zumindest im Wesentlichen gleich den dritten Farbwerten, wenn die dritten Positionen (dritte Farbwerte) in einem vorgegebenen Bereich oder Teil des dritten Farbraums liegen und/oder wenn die Ausgangstransformations- und oder Referenzpositionen (zweiten Farbwerte) in einem vorgegebenen Bereich oder Teilraum des Referenzfarbraums liegen. Insbesondere sind die Referenzfarbwerte zumindest im Wesentlichen gleich den dritten Farbwerten, wenn die Referenzfarbwerte und/oder dritten Farbwerte ein mittleres Grau darstellen oder in dessen Nähe sind. Auch erfolgt vorzugsweise keine oder keine wesentliche Änderung der Farbwerte, wenn die Farbwerte (die durch die dritte Positionen und/oder Referenzpositionen dargestellt werden) im Innenbereich (innen liegenden Unterraum, der insbesondere ein mittleres Grau umfasst) des Ausgangs-Farb-Gamuts und/oder des Referenz-Farb-Gamuts liegen. Dieser Innenbereich ist insbesondere von der Grenzfläche des Ausgangs-Farb-Gamuts und/oder des Referenz-Farb-Gamuts entfernt. Die Entfernung beträgt beispielsweise weniger als 50, 30 oder 10% des Mindestabstands zur Grenze des Eingangs-Farb-Gamuts und/oder Referenz-Farb-Gamuts.

Vorzugsweise erfolgt also die Ausgangstransformation lageabhängig, also z. B. abhängig von der Position der dritten Positionen und/oder der Referenzpositionen.

Die Referenzfarbwerte, die auf der Grenzfläche des Referenz-Farb-Gamuts liegen, werden durch die Abbildung der Ausgangstransformation im Referenzfarbraum vorzugsweise auf die Grenze (Grenzfläche) des Ausgangs-Farb-Gamuts abgebildet.

Vorzugsweise erfolgt eine Art plastische Verformung des Eingangs-Farb-Gamuts über den Referenz-Farb-Gamut in den Ausgangs-Farb-Gamut. Vorzugsweise ist diese Verformung, also Farbwertänderung, wie oben ausgeführt, im Zentralbereich, insbesondere in der Nähe der Grauachse, nicht oder nur gering ausgebildet, während der Umfang der Farbwertänderung zum Rand des Eingangs-Farb-Gamuts hin zunimmt, insbesondere in dem Maße wie der Eingangs-Farb-Gamut und der Ausgangs-Farb-Gamut im entsprechenden Farbwertbereich verschieden sind. Vorzugsweise werden also die ersten Farbwerte, die im Inneren des Eingangs-Farb-Gamuts liegen und in der Nähe der Grenze des Eingangs-Farb-Gamuts liegen, auf einen zweiten Farbwert abgebildet, der innerhalb des Ausgangs-Farb-Gamuts liegt und wieder in etwa gleich nahe an der Grenze des Ausgangs-Farb-Gamuts zu liegen kommt.

Wie oben beschrieben wurde, wird eine plastische Verformung des Eingangs-Farb-Gamuts über den Referenz-Farb-Gamut zum Ausgangs-Farb-Gamuts bevorzugt. Anders ausgedrückt, werden vorzugsweise die Nachbarschaftsbeziehungen beibehalten, wobei vorzugsweise die Änderungen der Abstände von benachbarten Farbwerten durch die Abbildung um so größer werden je näher die Farbwerte der Grenze des Farb-Gamuts liegen und/oder je verschiedener der Ausgangs-Gamut vom Eingangs-Gamut in diesem Farbwertbereich ist.

So weit in dieser Anmeldung von Abständen zwischen Farbwerten oder innerhalb eines Farbraums die Rede ist, bezieht sich dies insbesondere auf Farbabstände, wie sie nach CIE-Standards definiert sind, die sich insbesondere auf das menschliche Farbempfinden beziehen.

Beispielsweise ist der CIELAB-Farbraum ein Farbraum, der an die Farbempfindlichkeit des menschlichen Auges angepasst ist. In dem CIELAB-Farbraum erscheint jedes Farbpaar, das um einen euklidischen Abstand 1 getrennt ist, für einen menschlichen Betrachter gleich weit voneinander entfernt. Ein geschulter Betrachter ist unter idealen Bedingungen in der Lage, Farben bis zu etwa $\Delta E = [(\Delta L^2 + \Delta a^2 + \Delta b^2)]^{1/2} = 1$ zu unterscheiden.

Vorzugsweise ist die erste Abbildung innerhalb des Referenzfarbraums so gestaltet, dass eine die Abbildung umfassende Eingangstransformation vorzugsweise stetig ist. Vorzugsweise ist auch die erste Ableitung der Eingangstransformation stetig und wird insbesondere nicht singulär. Dies sollte jedenfalls für den relevanten Werteraum (also erste Farbwerte innerhalb des Eingangs-Farb-Gamuts und zweite Farbwerte innerhalb des Referenzgamuts gelten.

Vorzugsweise ist die zweite Abbildung innerhalb des Referenzfarbraums so gestaltet, dass eine die zweite Abbildung umfassende Ausgangstransformation vorzugsweise stetig ist. Vorzugsweise ist auch die erste Ableitung der Ausgangstransformation stetig und wird insbesondere nicht singulär. Dies gilt vorzugsweise zumindest für den relevanten Werteraum (also zweite Farbwerte innerhalb des Referenzgamuts und dritte Farbwerte innerhalb des Ausgangs-Farb-Gamuts).

Vorzugsweise ist der Referenz-Farb-Gamut so gestaltet, dass er nicht nur den Eingangs-Farb-Gamut einer Eingangsvorrichtung umfasst, sondern einer Vielzahl von Eingangsgeräten. Dadurch können Bilddaten, die von einer Vielzahl von Eingangsgeräten stammen, gemäß dem erfindungsgemäßen Verfahren zum Farbmanagement von Bilddaten verarbeitet werden. Vorzugsweise umfasst der Referenz-Farb-Gamut die Ausgangs-Farb-Gamuts einer Vielzahl von Ausgangsgeräten. Dadurch kann ein flexibles Farbmanagement für eine Vielzahl von Ausgangsgeräten erzielt werden. Vorzugsweise können also durch das erfindungsgemäße Verfahren die Bilddaten einer Vielzahl von Eingangsgeräten mit unterschiedlichen Farb-Gamuts flexibel an ein jeweils gewünschtes Ausgangsgerät einer Vielzahl von Ausgangsgeräten angepasst werden.

Die erste Abbildung und die zweite Abbildung innerhalb des Referenzfarbraums sind vorzugsweise so gestaltet, dass die ersten, zweiten und dritten Farbwerte den gleichen oder zumindest (sehr) ähnlichen Farbton aufweisen. Es erfolgt also vorzugsweise nur eine Verschiebung innerhalb einer Farbebene im Referenzfarbraum, auf dem der Farbton konstant ist. Dadurch wird ein wesentlicher Aspekt der Farbinformation beibehalten, während die Dynamik des Ausgangsgeräts beispielsweise hinsichtlich Helligkeit und/oder Farbsättigung voll genutzt werden kann.

Werden Manipulationen an den Farbwerten vorgenommen, insbesondere lokale Manipulationen, die sich auf die Farbwerte in Teilen des Bildes, also lokal, auswirken, so erfolgt es vorzugsweise im Referenzfarbraum, vorzugsweise basierend auf den Referenzpositionen und vorzugsweise unter Berücksichtigung des Referenzgamuts. Basierend auf den manipulierten Referenzpositionen werden dann beispielsweise gemäß einem der oben beschriebenen Verfahren die Bildsteuerdaten bestimmt. Dies hat den Vorteil, dass das Manipulationsverfahren unabhängig von dem Eingangsgerät und dem Ausgangsgerät eingesetzt werden kann. Manipulationsverfahren umfassen insbesondere Verfahren zur lokalen Abdunklung und/oder Aufhellung eines Bildes, Verfahren, die auf Bildinhaltserkennung gestützt sind, wie beispielsweise Verfahren zur Beseitigung des Roten-Augen-Effekts, und Verfahren, die auf die Erkennung von "Memory Colors" (Gedächtnisfarben), wie beispielsweise Hautfarben, gestützt sind. Allgemein sind insbesondere Verfahren umfasst, die sich auf lokale Änderungen der Bildeigenschaften innerhalb des Bildes, wie beispielsweise lokale Schärfeänderung, lokale Farbwertänderung, lokale Helligkeitsänderung usw. gerichtet sind.

Die vorliegende Erfindung betrifft insbesondere ein Programm, das, wenn es auf einem Computer durchgeführt wird oder von einer Datenverarbeitungseinheit durchgeführt wird, den Computer oder die Datenverarbeitungseinheit veranlasst, das Verfahren durchzuführen. Insbesondere betrifft die Erfindung auch ein Computerspeichermedium, wie beispielsweise eine CD, DVD, Diskette usw., das das vorgenannte Verfahren speichert oder die dem Programm entsprechende Information enthält. Weiter betrifft die vorliegende Erfindung eine Signalwelle, die als Information das vorgenannte Programm enthält und/oder transportiert, insbesondere eine Signalwelle, die eine Übertragung des Programms über ein Netzwerk, wie beispielsweise das Internet, darstellt.

Weiter betrifft die Erfindung einen Computer, auf dem das oben genannte Programm gespeichert ist.

Die Erfindung betrifft ebenfalls einen Fotoprinter, der beispielsweise mit Fotopapier arbeitet (beispielsweise einen DMD-Fotoprinter), Farbdrucker, wie beispielsweise Tintenstrahlfarbdrucker oder Laserfarbdrucker, oder ein Fotolabor, insbesondere ein Minilab, also ein Labor mit insbesondere kleiner Standfläche von wenigen Quadratmetern oder weniger als ein Quadratmeter, oder auch ein Großlabor. Der vorgenannte Fotoprinter, Farbdrucker oder das vorgenannte Fotolabor umfasst insbesondere eine Einheit zum Empfangen der Bilddaten. Diese Einheit ist beispielsweise eine Schnittstelle zum Empfangen von Daten über ein Netzwerk, insbesondere Internet, eine Speicherleseeinheit, wie beispielsweise CD-Lesegerät oder Memory-Card-Lesegeräte, um die Speichermedien zu lesen, auf dem die Bilddaten (fotografischen Bilder) gespeichert sind. Weiter ist eine Datenverarbeitungseinheit, insbesondere ein Computer, ein Motherboard mit CPU oder eine CPU oder ein ASIC. Diese Datenverarbeitungseinheit verarbeitet die empfangenen Bilddaten gemäß dem erfindungsgemäßen Verfahren, um die Bildsteuerdaten zur Ansteuerung eines Ausgangsgeräts, insbesondere eines Bilddarstellungssystems, insbesondere eines Bildaufzeichnungssystems, zu erhalten. Das Bildaufzeichnungssystem ist insbesondere eine Belichtungseinheit zur Belichtung eines lichtempfindlichen Fotopapiers gemäß den Bildsteuerdaten, ein Farbdrucker, insbesondere Tintenstrahldrucker oder Tonerdrucker, zur Erzeugung des fotografischen Bildes auf einem Medium, insbesondere Papier oder Folie.

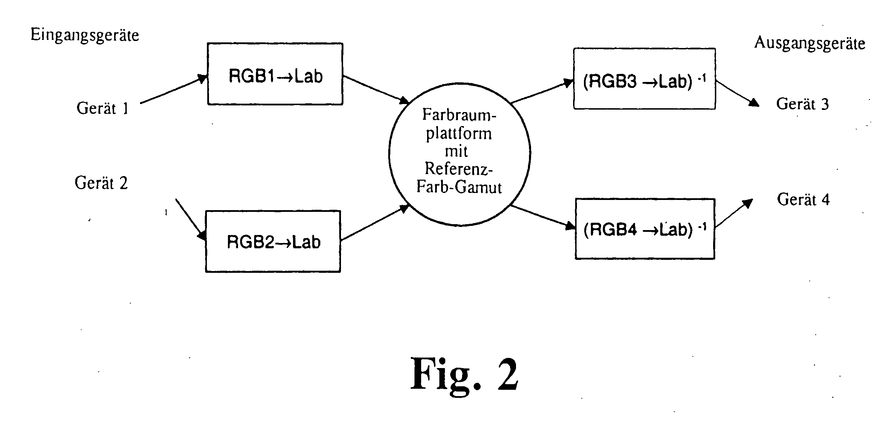

Die Erfindung betrifft ebenfalls Eingabegeräte, beispielsweise Filmscanner, und Ausgabegeräte, beispielsweise Fotoprinter, die örtlich getrennt sind und über ein Netzwerk (z.B. CAN oder Internet) verbunden sind. Die Übertragung der Bilddaten erfolgt vorzugsweise als Referenzpositionen im Referenzfarbraum. Die Erfindung betrifft auch ein System aus Ein- und Ausgangseinrichtungen, die beispielsweise über ein Netzwerk verbunden sind, wobei das System das erfindungsgemäße Verfahren nutzt. Insbesondere betrifft die vorliegende Erfindung eine Vorrichtung, (Eingangseinrichtung und/oder Ausgangseinrichtung) und/oder Verfahren zum Speichern und/oder Lesen und/oder Empfangen, Senden von Daten, die die erfindungsgemäß erzeugten Referenzpositionen darstellen. Insbesondere soll dieses Verfahren oder die Vorrichtung zur Verwendung in dem vorgenannten System ausgebildet sein, wobei die Eingangseinrichtung die linke Hälfte in Fig. 2 darstellt und die Ausgangseinrichtung die rechte Hälfte in Fig. 2 darstellt und die beiden Einrichtungen mittels der Referenzpositionen (oder Daten, die die Referenzpositionen darstellen) miteinander (z.B. über ein Netzwerk oder Datenträger) kommunizieren. Die Eingangseinrichtung erzeugt also nach dem erfindungsgemäßen Verfahren die Referenzpositionen aus den Bilddaten und die Ausgangseinrichtung erzeugt aus den Referenzpositionen die Bildsteuerdaten gemäß dem erfindungsgemäßen Verfahren. Die Eingangseinrichtung umfasst vorzugsweise mindestens ein Eingangsgerät, eine Datenverarbeitungsvorrichtung, um die empfangenen Bilddaten nach dem erfindungsgemäßen Verfahren in Referenzdaten umzuwandeln, die Referenzpositionen darstellen, und ein Datenspeichergerät, um die Referenzdaten auf einem Datenträger zu speichern, und/oder eine Referenzdaten-Sendeschnittstelle. Die Ausgangseinrichtung umfasst vorzugsweise ein Referenzdatenlesegerät, um die Referenzdaten von dem Datenträger zu lesen, und/oder eine Referenzdaten-Empfangsschnittstelle, eine Datenverarbeitungseinrichtung, um aus den empfangenen Referenzdaten nach dem erfindungsgemäßen Verfahren die Bildsteuerdaten zu bestimmen, und ein Ausgangsgerät, das durch die Bildsteuerdaten ansteuerbar ist.

Weitere erfindungsgemäße Vorteile und Eigenschaften werden bei der folgenden detaillierten Beschreibung offenbart. Verschiedene Merkmale unterschiedlicher Ausführungsformen können miteinander kombiniert werden.

Fig. 1    zeigt die Kopplung verschiedenster Eingangsgeräte mit verschiedenen Ausgangsgeräten über eine Farbraumplattform gemäß dem erfindungsgemäßen Verfahren;

Fig. 2    zeigt das erfindungsgemäße Farbmanagementverfahren;

Fig. 3    zeigt einen sRGB-Farb-Gamut und einen Fotopapier-Gamut im zweiten Farbraum;

Fig. 4    zeigt den Verlauf einer Wichtungsfunktion, die bei der Gewinnung der Referenzpositionen eingesetzt wird;

Fig. 5    zeigt eine Abbildung im zweiten Farbraum, bei der der Farbton erhalten bleibt;

Fig. 6    zeigt eine weitere Abbildungsfunktion, um die Referenzpositionen zu erhalten.

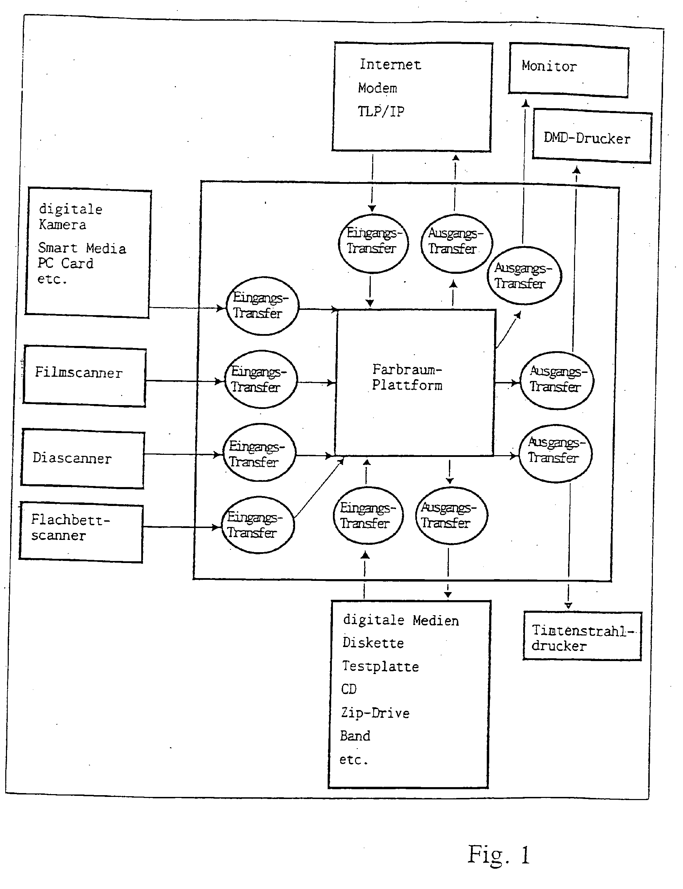

Fig. 1 zeigt eine Vernetzung von Eingangsgeräten und Ausgangsgeräten über eine Farbraumplattform. Als Farbraumplattform wird ein gewünschter Farbraum oder Standardraum genutzt, der oben als Referenzfarbraum bezeichnet ist. Vorzugsweise wird als Referenzfarbraum ein CIE-Farbraum, wie beispielsweise ein CIELAB-Farbraum oder ein CIEXYZ-Farbraum gewählt, wie sie beim heutigen Farbmanagementsystemen üblich sind Dieser hat die gewünschten Eigenschaften, dass er unabhängig vom Typ des Eingangsgeräts oder Ausgangsgeräts ist und dass er die Farbräume aller möglichen Eingangsgeräte und Ausgangsgeräte mit umfasst. Stellt man die empfangenen Bilddaten im Referenzfarbraum dar, indem man sie beispielsweise in den Referenzfarbraum transformiert, falls sie nicht schon im Referenzfarbraum vorhanden sind, so stellt man fest, dass die durch die Bilddaten dargestellten Farbwerte (erste Farbwerte) nicht vollständig unabhängig vom Typ des Geräts sind, da diese in Bezug auf die erfassbaren Farben eingeschränkt (beispielsweise Kamera oder Filmscanner). Anders ausgedrückt, die erste Farbwerte offenbaren die Eigenschaften des Eingangs-Gamuts der Eingangsgeräte. Der Referenzfarbraum ist vorzugsweise so gestaltet, dass er jedem Farbwert eine eigene und gut definierte Position bzw. einen einzigen Punkt in dem Farbraum zuweist. Vorzugsweise existieren definierte Transformationen zwischen dem ersten und dem Referenzfarbraum und insbesondere zwischen dem Referenzfarbraum und dem dritten Farbraum. Ausgangsgeräte sind insbesondere Bilddarstellungssysteme, wie Farbstoffsysteme (Fotoprinter oder Farbdrucker), Monitore, Speichermedien oder Netzwerkschnittstellen.

Fig. 2 zeigt das erfindungsgemäße Farbmanagement aus der Sicht der Farbräume. Die Eingangsgeräte sind als Gerät 1 und als Gerät 2 bezeichnet. Das Gerät 1 ist beispielsweise eine Digitalkamera, die Farbdaten in der Form des sRGB-Formats ausgibt. Das Gerät 2 ist beispielsweise ein Scanner, der einen Negativfilm scannt und die Daten als RGB-Daten ausgibt. Die vom Gerät 1 ausgegebenen Bilddaten werden als RGB1 bezeichnet und die vom Gerät 2 ausgegebenen Bilddaten werden als RGB2 bezeichnet. Die RGB1 und RGB2 liegen je in einem eigenen Farbraum vor. Durch das erfindungsgemäße Verfahren werden sie in den Referenzfarbraum transformiert. Bei dem in Fig. 2 gezeigten Beispiel handelt es sich dabei um den CIELAB-Farbraum. Innerhalb dieses Referenzfarbraum spiegeln nun die transformierten Bilddaten den Eingangs-Gamut des Geräts 1 oder Geräts 2 wider. Anders ausgedrückt, alle möglichen Eingangstransformationspositionen spannen im zweiten Farbraum den Eingangs-Farb-Gamut des Eingangsgeräts auf. Eine besondere Idee des erfindungsgemäßen Verfahrens liegt nun darin, diese Einschränkung, die den Eingangstransformationspositionen auferlegt ist, durch eine Abbildung (erste Abbildung) zu überwinden, die den Raum der möglichen Farbwerte in den Referenz-Gamut abbildet. Auf diese Art und Weise werden Eigenschaften des Eingangsgeräts (Farbeigenschaften) entfernt oder zumindest abgeschwächt.

Analog definieren die Ausgangstransformationspositionen der Ausgabegeräte 3 und 4 den Ausgabe-Farb-Gamut von Gerät 3 und 4 im Referenzfarbraum. Die Abbildung (zweite Abbildung) der Ausgangstransformation bildet wieder eine Vorschrift wie die zweiten Positionen auf den Ausgabe-Farb-Gamut der Geräte 3 und 4 abgebildet werden. Dann werden die Farbwerte je in den geräteabhängigen Farbraum RGB3 und RGB4 abgebildet. Auf diese Art und Weise werden Eigenschaften des Ausgangsgeräts (Farbeigenschaften) so berücksichtigt, das die Farbwiedergabe im Rahmen der Möglichkeiten optimal wird. Der Referenzfarbraum und die zu jedem Eingangsgerät zugehörigen ersten Abbildung, sowie zu jedem Ausgabegerät gehörigen zweiten Abbildung führt also zu einer Vermittlung zwischen dem Eingangsgerät und dem Ausgangsgerät. Dadurch, dass mehrere Eingangsgeräte und damit mehrere Eingangs-Farb-Gamuts und mehrere Ausgangsgeräte und damit mehrere Ausgangs-Farb-Gamuts über die Farbraumplattform verknüpft werden sollen, wird eine hohe Flexibilität mit einem weiten Anwendungsgebiet erzielt.

Vorzugsweise wird für jedes Eingangsgerät eine bijektive, also für jeden Farbwert invertierbare Transformation von dem Eingangsgerätfarbwert (erste Positionen) zu dem Referenzfarbwert (zweite Positionen) definiert.

Vorzugsweise wird für jedes Ausgangsgerät eine bijektive, also für jeden Farbwert invertierbare Transformation von dem Referenzfarbwert (zweite Positionen) zu Ausgangsgerätfarbwert (dritten Positionen) definiert.

Die Eingangstransformation von dem ersten Farbraum in den Referenzfarbraum ist vorzugsweise kolorimetrisch exakt, wenn die Farbwerte weit von der Gamutgrenze entfernt sind. Die Eingabetransformation erfolgt beispielsweise von RGB nach CIELAB. Die Farben auf der Gamutgrenze (beispielsweise der RGB-Würfelfläche) werden durch die Eingangstransformation vorzugsweise von der Oberfläche des RGB-Farbwürfels auf jene des Referenz-Farb-Gamuts abgebildet. Farben in der Nähe der Gamutgrenze werden vorzugsweise ähnlich einer plastischen Deformation deformiert, wobei benachbarte Farbwerte immer benachbarte Farbwerte bleiben. Die erste Ableitung der Transformation sollte nicht singulär werden, um eine bijektive Eigenschaft der Transformation zu erzielen. Aus numerischen Gründen sollte die erste Ableitung innerhalb eines vorgegebenen Wertebereichs bleiben.

Vorzugsweise werden die Referenzpositionen direkt mittels einer RGB-CIELab-Transformation berechnet. Die Bildsteuerdaten, die die dritten Positionen darstellen, werden vorzugsweise berechnet, indem zuerst eine RGB-CIELab-Transformation berechnet wird, die dann invertiert wird.

Die Vorteile der Erfindung liegen insbesondere darin, dass kein oder zumindest nur wenig Gamutmapping durchgeführt werden muss, die zu einem Verlust an Farbdetails und zu numerischen Problemen an den Gamutgrenzen führen kann. Außerdem kann die Transformation für jeden Farbwert invertiert werden. Schließlich geht keine Farbinformation verloren.

Eine Reihe von Farbwertänderungen, die beispielsweise Abbildungen innerhalb des zweiten Farbraums entsprechen, sind möglich. Beispielsweise kann die Größe des Innenbereiches des Referenz-Farb-Gamuts, für den keine Farbwertänderung erfolgen soll, variiert werden. Hinsichtlich der Farbwertänderung, also insbesondere hinsichtlich der Farbwerte, die am Rand des Gamuts liegen, sind verschiedene Verfahren möglich. Beispielsweise kann das Gewicht zur Beibehaltung oder Änderung der Farbtonkomponenten, Farbsättigungskomponenten oder Helligkeitskomponenten variiert werden.

Der Referenz-Farb-Gamut kann vielfältig gewählt werden. Beispielsweise kann der Gamut von XYZ, jener von sRGB, der Gamut einer typischen Ausgabevorrichtung oder sogar ein geometrisch gut definierter Gamut (wie beispielsweise eine Kugel) gewählt werden. Vorzugsweise sollte jedoch das Volumen des Referenz-Farb-Gamuts ungefähr gleich groß oder größer als das Volumen der Eingangs- und Ausgangs-Farb-Gamuts sein.

Bei der Verarbeitung der Bilddaten, kann die Kette der Transformationen (erste Farbraumtransformation, erste Abbildung, zweite Abbildung, zweite Farbraumtransformation) schrittweise, eine Transformation nach der anderen durchgeführt werden. Die Kette der Transformation kann sowohl in der genannten Reihenfolge durchlaufen werden, als auch in der entgegengesetzten Richtung (umgekehrte Reihenfolge), je nach Wunsch und Ziel. Vorzugsweise können aber auch zwei, drei oder vier benachbarte Transformationen zu einer Transformation zusammengefasst werden um das Bild weniger Transformationen unterwerfen zu müssen, was eine schnellere Verarbeitung ermöglicht. Insbesondere kann die Eingangstransformation (erste Farbraumtransformation und erste Abbildung) mit der Ausgangstransformation (zweite Abbildung und zweite Farbraumtransformation) zu einer einzigen Transformation verknüpft werden.

Fig. 3 zeigt als Eingangs-Farb-Gamut im zweiten Farbraum den Gamut des sRGB sowie als Ausgangs-Farb-Gamut den Gamut des Fotopapiers. Wie man sieht, überlappen sich die beiden Gamuts in weiten Bereichen. Es liegen aber auch Teile des sRGB-Gamuts außerhalb des Fotopapier-Gamuts und umgekehrt. Erfindungsgemäß umfasst also der Referenz-Farb-Gamut sowohl den sRGB-Gamut als auch den Fotopapier-Gamut.

Im folgenden wird als erstes Beispiel eine Kombination aus dem Gamut des Fotopapiers mit dem sRGB-Gamut als Referenz-Farb-Gamut verwendet. Zu diesem Zweck wird vorzugsweise eine Transformation von einem Papier-RGB-Farbraum in den CIELAB-Farbraum definiert. Dies kann beispielsweise durch ein einfaches Gitter oder eine Masche erfolgen, die beispielsweise die Dimension 65 x 65 x 65 hat. Zwischenliegende Punkte werden durch lineare Interpolation definiert. Alternativ kann eine mathematisch definierte Funktion verwendet werden. Für jedes Farbtripel von RGB gibt es ein entsprechendes CIELAB-Tripel, das als $Lab_{pRGB}$ bezeichnet wird. Im folgenden wird die Berechnung des CIELAB-Tripels aus den RGB-Tripels beschrieben.

In dem beschriebenen Beispiel wird sRGB beispielhaft verwendet, um die Farben des Eingangsgeräts darzustellen. Somit kann die Standardformel verwendet werden, um eine Transformation von sRGB nach CIELAB vorzunehmen. Neben dem sRGB-Farbraum können auch andere RGB-Farbräume verwendet werden. Vorzugsweise sind jedoch Transformationen von diesem Farbraum in den zweiten Farbraum (beispielsweise-CIELAB) bekannt.

Die Transformation kann beispielsweise wie folgt definiert werden, wobei Lab für ein Wertetripel steht:

$$Lab_{gewichtet} = (1 - w_{RGB}) \cdot Lab_{sRGB} + w_{RGB} \cdot Lab_{pRGB}$$

Das Gewicht $W_{RGB}$ ist eine Funktion des nächsten Abstandes $d_{RGB}$ von einem sRGB-Datum (erste Position) zu derMitte des sRGB-Würfels. $W_{RGB} = 1$ für Farben auf der Oberfläche des RGB-Würfels und $W_{RGB} = 0$ in der Mitte des RGB-Würfels. Der Abstand d wird auf 1 normiert, falls er den Abstand von der Oberfläche des Würfels zur Mitte des Würfels bezeichnet.

Eine typische Wichtungsfunktion lautet wie folgt:

$$w_i := \text{if}\left[ d_i > \text{cutOff}, \left[ 1 - \cos\left[ \frac{\pi}{2 \cdot (1 - \text{cutOff})} \cdot (d_i - \text{cutOff}) \right]^2 \right], 0 \right]$$

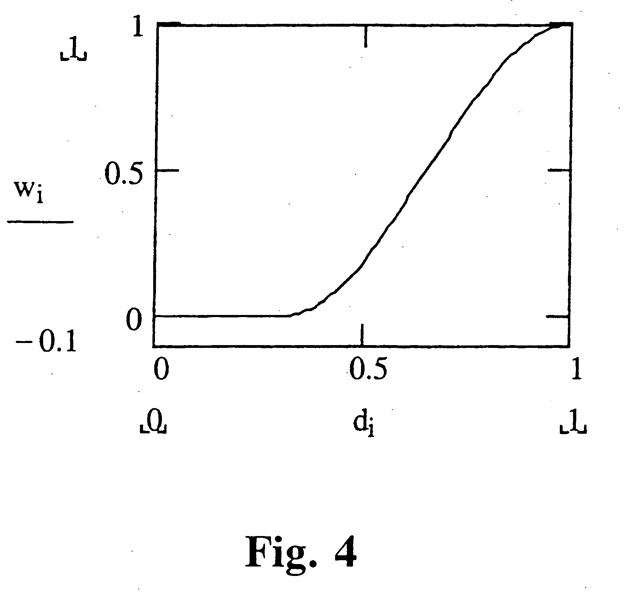

Das in obiger Formel verwendete $w_i$ ist beispielsweise $w_{RGB}$ und das obige $d_i$ ist beispielsweise das $d_{RGB}$ und "i" bezeichnet das i-te sRGB-Datum. Der Verlauf von $w_i$ ist in Fig. 4 als Funktion von $d_i$ gezeigt. Wie man sieht, ist die "plastische Verformung" in der Nähe des Zentrums nahezu nicht oder wenig vorhanden und steigt dann ab etwa 30% des maximalen Wertes von $d_{RGB}$ nach außen hin an. Also für große Abstände nimmt der Einfluss des Ausgangs-Referenz-Gamuts mit zunehmendem Abstand zu, wohingegen der Einfluss des Eingangs-Referenz-Gamuts mit zunehmendem Abstand abnimmt, aber für kleine Abstände zumindest überwiegt.

Andere Wichtungsfunktionen, die die folgenden Bedingungen erfüllen, können ebenso geeignet sein:

$w_i$ = 1,0 auf der Oberfläche;
$w_i$ = 0,0 in der Mitte des Würfels;
$w_i$ steigt monoton an;

die erste Ableitung von $w_i$ nach $d_i$ ist für alle $0 \leq d_i \leq 1$ nicht singulär und insbesondere innerhalb eines vorgegebenen Wertebereichs, der sich für eine (vorgegebene) numerische Verarbeitung eignet.

Im folgenden wird ein Beispiel beschrieben, bei dem der Referenzgamut den vollen XYZ-Gamut umfasst.

Der Gamut des XYZ umfasst alle möglichen Farben. Die Transformation wird in drei Schritten beschrieben:

Die Transformation erfolgt von CIELAB nach XYZ gemäß einer Standardformel. Liegen die Eingangsdaten noch nicht in der CIELAB-Form vor, so wird, wie z.B. im vorherigen Beispiel beschrieben, eine Transformation von CIELAB nach XYZ durchgeführt. Die sich aus dieser Transformation $L_{sample}$-Werten ergebenden XYZ-Werte werden als $XYZ_{sample}$ bezeichnet.

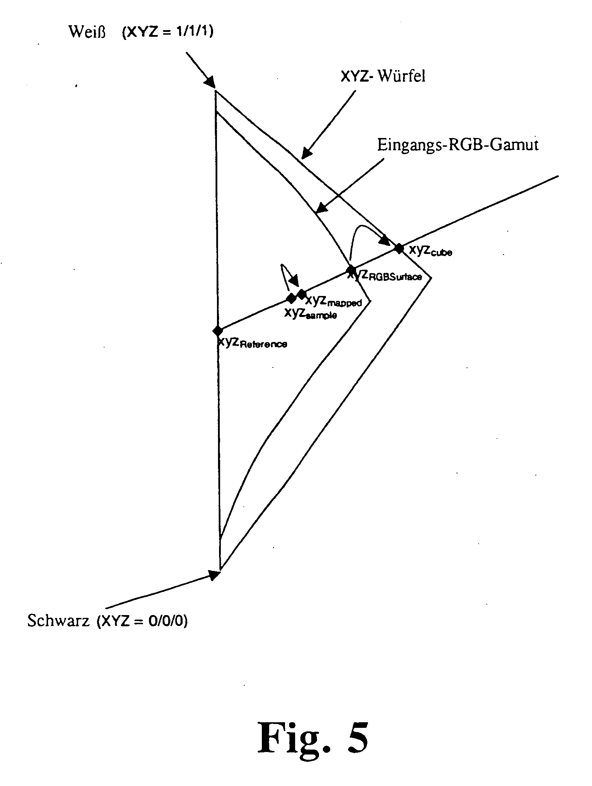

Als Nächstes werden die $XYZ_{sample}$-Werte in $XYZ_{mapped}$-Werte transformiert, wobei der Farbton bewahrt wird. Innerhalb der XYZ-Halbebenen, die die Grauachse (x, x, x) mit x = 0 ... 1 enthalten, werden alle Farben beschrieben, die einen bestimmten Farbton aufweisen. Die Abbildung 5 zeigt eine derartige Halbebene, die diese Grauachse enthält. Alle Farbwerte in der in Fig. 5 gezeigten Halbebene die nicht auf der Grauachse liegen haben denselben Farbton. Als dritter Schritt erfolgt dann eine Transformation zurück in den CIELAB-Farbraum gemäß einer Standardformel. Die xyzmapped-Werte werden dadurch in $L_{mapped}$-Werte transformiert.

Zusammengefasst wird also die Transformation XYZsample zu XYZ-mapped in Halbebenen mit konstantem Farbton beschrieben. Für jeden Farbwert mit der Position $xyz_{sample}$ kann man eine Gerade definieren, die durch zwei Punkte geht. Der eine Punkt wird als Referenzpunkt $XYZ_{reference}$ bezeichnet (beispielsweise 0,5, 0,5, 0,5) und der andere wird als $xyz_{sample}$ bezeichnet. Diese Linie kreuzt den Eingangs-Farb-Gamut (RGB-Gamut) bei dem Punkt XYZRGB-Surface und den XYZ-Würfel bei $xyz_{cube}$.

Für alle Punkte auf der Geraden gilt die Abbildungsfunktion: $XYZ_{mapped} = f(xyz_{sample})$. Diese Funktion kann mit folgenden Randbedingungen definiert werden: XYZRGB-Surface wird auf $xyz_{cube}$ abgebildet und Punkte in der Nähe von $xyz_{reference}$ können ungeändert verbleiben. Außerdem soll, wie oben erwähnt, der Farbton unverändert bleiben, was a priori sichergestellt ist, indem alle Farbverschiebungen innerhalb der Halbebene vorgenommen werden.

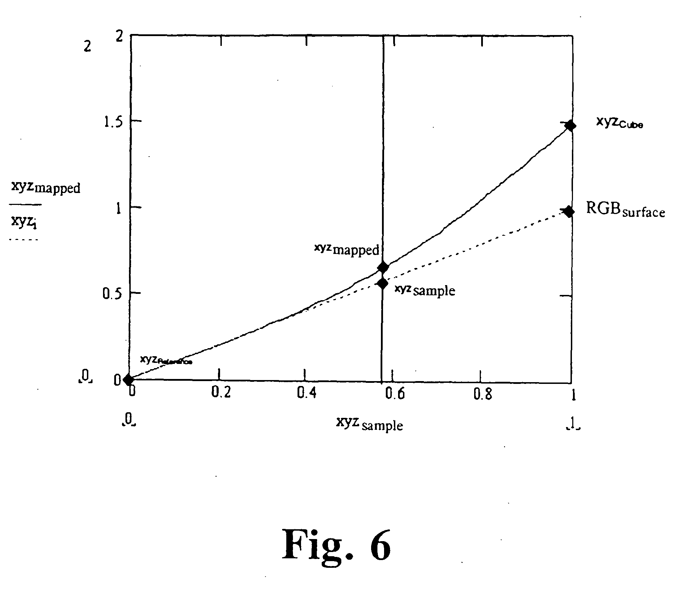

Fig. 6 zeigt eine typische Abbildungsfunktion für f. Die durchgehende Linie bezeichnet den Verlauf der Funktion f in Abhängigkeit von $xyz_{sample}$. Die gestrichelte Linie bezeichnet den Fall einer 1:1-Abbildung, das heißt $xyz_{sample} = xyz_{mapped}$, was der Fall ist wenn in der entsprechenden Richtung der Eingangs-RGB-Gamut gleich dem Referenzgamut ist.

**Patentansprüche**

1. Verfahren zum Farbmanagement von Bilddaten, die Farbwerte eines Bildes darstellen, um eine möglichst optimale Änderung der Farbwerte in Hinblick auf unterschiedliche und gegebene Farb-Gamuts eines Eingangsgeräts, insbesondere Filmscanner oder Digitalkamera und eines Ausgangsgeräts, insbesondere Fotoprinter oder Fotolabor erzielen zu können, wobei ein Eingangs-Farb-Gamut (SRGB-Gamut; RGB2) alle Farbwerte umfasst, die durch das Eingangsgerät erfassbar und als Bilddaten ausgebbar sind, und ein Ausgangs-Farb-Gamut (Fotopapier-Gamut; RGB3, RGB4) alle Farbwerte umfasst, die bei Eingabe von Bildsteuerdaten in das Ausgangsgerät durch das Ausgangsgerät verarbeitbar sind, mit folgenden Schritten:

a) die Bilddaten, die erste Positionen in einem ersten Farbraum darstellen und erste Farbwerte beschreiben, die innerhalb des Eingangs-Farb-Gamuts (SRGB-Gämut) liegen, werden empfangen;
b) die ersten Positionen werden durch eine Eingangstransformation in Referenzpositionen transformiert, wobei die Transformation so gestaltet ist, dass die Referenzpositionen in einem Referenzfarbraum liegen und zweite Farbwerte beschreiben, wobei ein Referenz-Farb-Gamut (SRGB-Gamut + Fotopapier-Gamut) die durch die Referenzpositionen darstellbaren Farbwerte festlegt und wobei der Referenzfarbraum (CIELAB; XYZ) ein vorrichtungsunabhängiger Farbraum ist;
c) die Referenzpositionen werden durch eine Ausgangstransformation in dritte Positionen transformiert, wobei die Ausgangstransformation so gestaltet ist, dass die dritten Positionen in einem dritten Farbraum liegen und dritte Farbwerte beschreiben, die vom Ausgangs-Farb-Gamut des Ausgangsgeräts umfasst sind; **dadurch gekennzeichnet, dass** der Referenz-Farb-Gamut nur die Farbwerte des Eingangs-Farb-Gamuts und des Ausgangs-Farb-Gamuts umfasst.

**2.** Verfahren nach Anspruch 1, bei welchem die Eingangs-Transformation so gestaltet ist, dass

a) die zweiten Farbwerte zumindest im wesentlichen gleich den ersten Farbwerten sind, wenn die Farbwerte um ein mittleres Grau oder in dessen Nähe sind und/oder wenn die ersten und/oder zweiten Farbwerte im Innenbereich des Eingangs-Farb-Gamut und/oder Referenz-Farb-Gamuts entfernt von der Grenzfläche des Eingangs-Farb-Gamuts und/oder Referenz-Farb-Gamuts sind; und/oder
b) die ersten Farbwerte, die auf der Grenzfläche des Eingangs-Farb-Gamuts liegen, auf auf der Grenzfläche des Referenz-Farb-Gamuts liegende zweite Farbwerte abgebildet werden; und/oder
c) die Nachbarschaftsbeziehungen zwischen den Farbwerten beibehalten werden, wobei erste Farbwerte, die benachbart sind, in zweite Farbwerte abgebildet werden, die ebenfalls benachbart sind; und/oder
d) die Eingangs-Transformation bijektiv ist.

**3.** Verfahren nach Anspruch 1 oder 2, bei welchem die Ausgangs-Transformation so gestaltet ist, dass

a) die dritten Farbwerte zumindest im wesentlichen gleich den zweiten Farbwerten sind, wenn die Farbwerte um ein mittleres Grau oder in dessen Nähe sind und/oder wenn die zweiten Farbwerte und/oder dritten Farbwerte im Innenbereich des Ausgangs-Farb-Gamut und/oder Referenz-Farb-Gamuts entfernt von der Grenzfläche des Ausgangs-Farb-Gamuts und/oder Referenz-Farb-Gamuts sind; und/oder
b) die zweiten Farbwerte, die auf der Grenzfläche des Referenz-Farb-Gamuts liegen, auf der Grenzfläche des Ausgangs-Farb-Gamuts liegende dritte Farbwerte abgebildet werden; und/oder
c) die Nachbarschaftsbeziehungen zwischen den Farbwerten beibehalten werden, wobei zweite Farbwerte, die benachbart sind, in dritte Farbwerte abgebildet werden, die ebenfalls benachbart sind; und/oder
d) die Ausgangs-Transformation bijektiv ist.

**4.** Verfahren nach Anspruch 1 oder 2 oder 3, bei welchem der Referenz-Farb-Gamut eine Vielzahl von Eingangs-Farb-Gamuts einer Vielzahl von Eingangsgeräten und/oder eine Vielzahl von Ausgangs-Farb-Gamuts einer Vielzahl von Ausgangsgeräten umfasst.

**5.** Verfahren nach einem der Ansprüche 1 bis 4, bei welchem die Eingangstransformationen ($XYZ_{sample} \rightarrow XYZ_{mapped}$) so gestaltet ist, dass zumindest ein Teil der zweiten Farbwerte nach der Eingangstransformation den gleichen Farbton aufweisen wie vorher.

**6.** Verfahren nach einem der vorhergehenden Ansprüche, bei welchem die Bilddaten, die die Referenzpositionen im Referenzfarbraum darstellen, optimiert werden, bevor sie weiter verarbeitet werden, um die Bildsteuerdaten zu erhalten.

**7.** Programm, das, wenn es in einen Computer geladen wird oder auf diesem läuft, den Computer veranlasst das Verfahren nach einem der Ansprüche 1 bis 6 auszuführen.

**8.** Computerspeichermedium oder Computer mit einem Programm nach Anspruch 7.

**9.** Fotoprinter, Farbdrucker oder Fotolabor, insbesondere Großlabor oder Minilab,
mit einer Einheit zum Empfangen der Bilddaten; und
mit einer Datenverarbeitungseinheit, die die empfangenen Bilddaten gemäß dem Verfahren nach einem der Ansprüche 1 bis 6 verarbeitet, um die Bildsteuerdaten zu erhalten; sowie
mit einem Bildaufzeichnungssystem, das ein fotografisches Bild basierend auf den Bildsteuerdaten auf einem Aufzeichnungsmedium, insbesondere Papier oder Fotopapier, erzeugt.

## Claims

**1.** Method for the colour management of image data which represent the colour values of an image, in order to be able to achieve as far as possible an optimum change in the colour values in respect of different and given colour ranges of an input device, in particular a film scanner or digital camera, and of an output device, in particular a photographic printer or photographic laboratory, wherein an input colour range (SRGB range; RGB2) includes all colour values that can be captured by the input device and can be output as image data, and an output colour range (photographic paper range; RGB3, RGB4) includes all colour values that can be processed by the output device upon input of image control data into the output device, with the following steps:

a) the image data are received which represent first positions in a first colour space and describe first colour values that lie within the input colour range (SRGB range);

b) the first positions are transformed via an input transformation into reference positions, wherein the transformation is designed such that the reference positions lie in a reference colour space and describe second colour values, wherein a reference colour range (SRGB range + photographic paper range) defines the colour values that can be represented by the reference positions, and wherein the reference colour space (CIELAB; XYZ) is a colour space independent of the device;

c) the reference positions are transformed via an output transformation into third positions, wherein the output transformation is designed such that the third positions lie in a third colour space and describe third colour values which are included by the output colour range of the output device;

**characterised in that** the reference colour range comprises only the colour values of the input colour range and of the output colour range.

2. Method according to claim 1, in which the input transformation is designed in such a way that

a) the second colour values are at least essentially the same as the first colour values, when the colour values are around a medium grey or in its vicinity and/or when the first and/or second colour values are in the inner region of the input colour range and/or reference colour range, at a distance from the interface of the input colour range and/or reference colour range; and/or

b) the first colour values which lie on the interface of the input colour range are mapped onto second colour values lying on the interface of the reference colour range; and/or

c) the neighbourhood relationships between the colour values are maintained, wherein first colour values that are adjacent are mapped into second colour values that are likewise adjacent; and/or

d) the input transformation is bijective.

3. Method according to claim 1 or 2, in which the output transformation is designed in such a way that

a) the third colour values are at least essentially the same as the second colour values, when the colour values are around a medium grey or in its vicinity and/or when the second colour values and/or third colour values are in the inner region of the output colour range and/or reference colour range, at a distance from the interface of the output colour range and/or reference colour range; and/or

b) the second colour values which lie on the interface of the reference colour range are mapped onto third colour values lying on the interface of the output colour range; and/or

c) the neighbourhood relationships between the colour values are maintained, wherein second colour values that are adjacent are mapped into third colour values that are likewise adjacent; and/or

d) the output transformation is bijective.

4. Method according to claim 1 or 2 or 3, in which the reference colour range comprises numerous input colour ranges of numerous input devices and/or numerous output colour ranges of numerous output devices.

5. Method according to one of the claims 1 to 4, in which the input transformations ($XYZ_{sample} \rightarrow XYZ_{mapped}$) is [*sic*] designed in such a way that at least a portion of the second colour values has the same hue after the input transformation as before.

6. Method according to one of the preceding claims, in which the image data that represent the reference positions in the reference colour space are optimised before they are processed further to obtain the image control data.

7. Program which, when it is loaded into a computer or runs on it, causes the computer to execute the method according to one of the claims 1 to 6.

8. Computer storage medium or computer with a program according to claim 7.

9.  Photographic printer, colour printer or photographic laboratory, in particular a large laboratory or a minilab,
    with a unit for receiving the image data; and
    with a data processing unit which processes the received image data in accordance with the method according to
    one of the claims 1 to 6, in order to obtain the image control data; as well as
    with an image recording system that produces a photographic image based on the image control data on a recording
    medium, in particular paper or photographic paper.

**Revendications**

1.  Procédé pour la gestion de couleur de données d'image, qui représentent des valeurs chromatiques d'une image,
    afin de pouvoir obtenir une modification la plus optimale possible des valeurs chromatiques en ce qui concerne
    différentes gammes de couleurs et des gammes de couleurs données d'un appareil d'entrée, en particulier scanner
    de film ou caméra numérique, et d'un appareil de sortie, en particulier imprimante photo ou laboratoire photo, une
    gamme de couleurs d'entrée (gammes SRGB ; RGB2) comprenant toutes les valeurs chromatiques qui peuvent
    être enregistrées par l'appareil d'entrée et peuvent être éditées sous la forme de données d'image, et une gamme
    de couleurs de sortie (gamme de papier photo ; RGB3, RGB4) comprenant toutes les valeurs chromatiques qui
    peuvent être traitées par l'appareil de sortie en cas d'entrée de données de commande d'image dans l'appareil de
    sortie, comprenant les étapes suivantes :

    a) les données d'image, qui représentent des premières positions dans un premier espace couleur et décrivent
    des premières valeurs chromatiques, situées à l'intérieur de la gamme de couleurs d'entrée (gamme SRGB),
    sont reçues ;
    b) les premières positions sont transformées par une transformation d'entrée en positions de référence, la
    transformation étant constituée de telle sorte que les positions de référence se situent dans un espace couleur
    de référence et décrivent des secondes valeurs chromatiques, une gamme de couleurs de référence (gamme
    SRGB + gamme de papier photo) définissant les valeurs chromatiques pouvant être représentées par les
    positions de référence et l'espace couleur de référence (CIELAB ; XYZ) étant un espace couleur indépendant
    du dispositif ;
    c) les positions de référence sont transformées par une transformation de sortie en troisièmes positions, la
    transformation de sortie étant conçue de telle sorte que des troisièmes positions sont situées dans un troisième
    espace couleur et décrivent des troisièmes valeurs chromatiques qui sont englobées par la gamme de couleurs
    de sortie de l'appareil de sortie ; **caractérisée en ce que** la gamme de couleurs de référence ne comprend
    que les valeurs chromatiques de l'ensemble des couleurs d'entrée et de l'ensemble des couleurs de sortie.

2.  Procédé selon la revendication 1, dans lequel la transformation d'entrée est conçue de telle sorte que

    a) les deuxièmes valeurs chromatiques sont au moins sensiblement égales aux premières valeurs chromatiques
    lorsque les valeurs chromatiques sont proches d'un gris moyen ou à proximité et/ou lorsque les premières et/ou
    secondes valeurs chromatiques sont éloignées de la surface limite de la gamme de couleurs d'entrée et/ou de
    la gamme de couleurs de référence dans la plage intérieure de la gamme de couleurs d'entrée et/ou de la
    gamme de couleurs de référence, et/ou
    b) les premières valeurs chromatiques, qui sont situées sur la surface limite de l'ensemble de couleurs d'entrée,
    sont reproduites sur des secondes valeurs chromatiques situées sur la surface limite de l'ensemble de couleurs
    de référence, et/ou
    c) les relations de voisinage entre les valeurs chromatiques sont conservées, les premières valeurs chromatiques
    qui sont voisines, étant reproduites en secondes valeurs chromatiques qui sont également voisines ; et/ou
    d) la transformation d'entrée est bijective.

3.  Procédé selon la revendication 1 ou 2, dans lequel la transformation de sortie est constituée de telle sorte que

    a) les troisièmes valeurs chromatiques sont au moins sensiblement identiques aux secondes valeurs chromatiques lorsque les valeurs chromatiques sont proches d'un gris moyen ou à proximité et/ou lorsque les secondes
    valeurs chromatiques et/ou les troisièmes valeurs chromatiques sont situées dans la zone intérieure de la
    gamme de couleurs de sortie et/ou de la gamme de couleurs de référence à distance de la surface limite de la
    gamme de couleurs de sortie et/ou de la gamme de couleurs de référence ; et/ou
    b) les secondes valeurs chromatiques, qui sont situées sur la surface limite de la gamme de couleurs de
    référence, sont reproduites sous la forme de troisièmes valeurs chromatiques situées à la surface limite de la gamme de couleurs de sortie ; et/ou

c) les relations de voisinage entre les valeurs chromatiques sont conservées, des secondes valeurs chromatiques, qui sont voisines, étant reproduites en troisièmes valeurs chromatiques qui sont également voisines ; et/ou

d) la transformation de sortie est bijective.

4. Procédé selon la revendication 1 ou 2 ou 3, dans lequel la gamme de couleurs de référence comprend une pluralité de gammes de couleurs d'entrée d'une pluralité d'appareils d'entrée et/ou une pluralité de gammes de couleurs de sortie d'une pluralité d'appareils de sortie.

5. Procédé selon l'une des revendications 1 à 4, dans lequel la transformation d'entrée ($XYZ_{sample}$ -7 $XYZ_{mapped}$) est conçue de sorte qu'au moins une partie des secondes valeurs chromatiques présente après la transformation d'entrée la même teinte qu'auparavant.

6. Procédé selon l'une des revendications précédentes, dans lequel les données d'image, qui représentent les positions de référence dans l'espace couleur de référence, sont optimisées avant qu'elles soient retraitées pour recevoir les données de commande d'image.

7. Programme qui, lorsqu'il est chargé dans un ordinateur ou fonctionne sur celui-ci, demande à l'ordinateur d'exécuter le procédé selon l'une des revendications 1 à 6.

8. Support de stockage d'ordinateur ou ordinateur avec un programme selon la revendication 7.

9. Imprimante photo, imprimante couleur ou laboratoire photo, en particulier grand laboratoire ou minilaboratoire, comprenant une unité pour la réception des données ; d'image et une unité de traitement de données qui traite les données d'image reçues selon le procédé selon l'une des revendications 1 à 6, afin d'obtenir les données d'image de commande ; ainsi qu'

un système d'enregistrement d'image, qui génère une image photographique sur la base des données de commande d'image sur un support d'enregistrement, en particulier du papier ou du papier photo.

Fig. 1

Eingangsgeräte

Ausgangsgeräte

RGB1→Lab

Gerät 1

Gerät 2

RGB2→Lab

Farbraumplattform
mit
Referenz-
Farb-Gamut

(RGB3 →Lab) $^{-1}$

Gerät 3

(RGB4 →Lab) $^{-1}$

Gerät 4

# Fig. 2

Fig. 3

**Fig. 4**

Weiß  (XYZ = 1/1/1)

XYZ- Würfel

Eingangs-RGB-Gamut

xyz$_{cube}$

xyz$_{RGBSurface}$

xyz$_{mapped}$
xyz$_{sample}$

xyz$_{Reference}$

Schwarz (XYZ = 0/0/0)

# Fig. 5

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5696839 A

- EP 1122478 A

**In der Beschreibung aufgeführte Nicht-Patentliteratur**

- **MARY NIELSEN ; MICHAEL STOKES.** The Creation of the sRGB ICC Profile. *Hewlett-Packard Company,* 1998, vol. 568, 253-257